Europäisches Patentamt

(19) European Patent Office

Office européen des brevets

(11) Numéro de publication : **0 393 004 B1**

(12) **FASCICULE DE BREVET EUROPEEN**

(45) Date de publication du fascicule du brevet :
**29.01.92 Bulletin 92/05**

(21) Numéro de dépôt : **90870045.3**

(22) Date de dépôt : **23.03.90**

(51) Int. Cl.⁵ : **B66F 11/04,** B65G 49/06

(54) **Engin de manutention.**

(30) Priorité : **24.03.89 BE 8900327**

(43) Date de publication de la demande :
**17.10.90 Bulletin 90/42**

(45) Mention de la délivrance du brevet :
**29.01.92 Bulletin 92/05**

(84) Etats contractants désignés :
**BE DE FR GB LU NL**

(56) Documents cités :
**EP-A- 0 175 987**
**DE-A- 2 327 914**
**FR-A- 2 274 547**
**UD-A- 3 439 372**
**US-A- 4 676 713**

(73) Titulaire : **GLACERIES DE SAINT-ROCH, S.A.**
**Rue des Glaces Nationales, 169**
**B-5700 Sambreville (BE)**

(72) Inventeur : **Mairlot, Henri**
**Rue du Bois, 218**
**B-6300 Acoz (BE)**

(74) Mandataire : **Plucker, Guy et al**
**OFFICE KIRKPATRICK 4 Square de Meeûs**
**B-1040 Bruxelles (BE)**

## Description

L'invention concerne un engin de manutention pour des feuilles de verre, notamment pour la construction de serre à grande luminosité, plus généralement pour la manipulation et le placement direct en hauteur de feuilles de verre ou autres objets pouvant être saisis par un plateau à ventouses.

On cherche à obtenir, notamment pour les serres horticoles, une luminosité maximale, 1% de transmission lumineuse supplémentaire correspondant pratiquement à une production supérieure à 1%.

Un des moyens possibles pour progresser en ce sens est d'accroître la surface des volumes de verre de façon à réduire l'ombrage dû à l'encadrement de ces volumes.

Jusqu'à présent, des volumes de verre de ± 1 m × 1,65 m étaient soulevés manuellement de tréteaux et passaient de main en main aux monteurs juchés dans les superstructures.

Il s'agit là d'un travail pénible et dangereux qui sera d'ailleurs interdit bientôt dans certains Etats.

Actuellement, on envisage d'utiliser des feuilles de plus grandes dimensions allant jusqu'à 1,6 × 1,7 m, avec lesquelles il n'est déjà plus possible d'utiliser des techniques de manutention classiques.

Différents constructeurs ou monteurs ont donc cherché à réaliser des engins élévateurs mécanisés.

On connaît actuellement des élévateurs accrochés à la charpente des serres à monter. Un tel élévateur permet déjà de gagner 25% sur le temps de main-d'oeuvre, mais son seul montage dans l'ossature prend déjà près de 1 heure.

On connaît également un élévateur sur tracteur, où deux desservants placent le verre sur un support qui est ensuite élevé, une charnière permettant au support de donner une inclinaison favorable au verre. La mise en place elle-même reste cependant manuelle, puisque seules l'inclinaison et une translation latérale sont possibles.

Le brevet US-4676713 décrit un engin destiné à aider un opérateur à déplacer des objets plans, tels que des panneaux en verre. Il s'agit d'un châssis automoteur portant un mât vertical sur lequel est montée une vergue télescopique comportant à son extrémité un plateau à ventouses. Les mouvements permis par un tel engin sont limités en hauteur et en degrés de liberté. Le mât est supporté par un plateau à roulettes permettant une translation latérale, mais il n'est pas articulé.

Le document FR-A-2274547 décrit un engin porteur de tuyaux doté d'une flèche comportant une plateforme aérienne et une structure support comportant deux bras rigides dotés de pinces permettant de déplacer du matériel d'une position basse, dite "de saisie" à une position haute où un opérateur a accès au matériel soulevé. L'engin décrit dans ce document permet un mouvement élémentaire (saisie-élévation) et ne conviendrait pas pour le placement avec grande précision de panneaux vitrés sur leur support.

Le brevet US-3439372 décrit un dispositif à nacelle pour le nettoyage des avions. Il comporte un chariot élévateur, une nacelle de commande pivotante supportant une flèche tripode pouvant pivoter autour de son axe longitudinal.

Cette flèche supporte, à pivotement dans un seul plan, un bras télescopique portant à son extrémité une brosse rotative et son système d'entraînement.

Un tel dispositif permet de placer la brosse rotative dans des positions variées, mais ne serait pas adapté au déplacement de grands volumes de verre, même si on y montait un plateau à ventouses, la flèche tripode, non articulée, imposant des enchaînements de mouvements complexes préjudiciables à la sécurité.

Lorsqu'il s'agit de grands volumes (2 × 3,2 m ou 2,12 × 3,6 m) éventuellement encadrés tels que décrits dans les demandes EP-A-282469 ou EP-A-282468, aucun des dispositifs connus ne peut donner satisfaction.

On a donc cherché à développer un dispositif permettant à un seul homme de réaliser la manipulation complète même de grands volumes de verre, depuis la prise sur chevalet au niveau du sol jusqu'à la mise en place sur la charpente, ces volumes pouvant être plats ou bombés, simples ou doubles, encadrés ou non encadrés et ce aussi bien pour la couverture de serres que de verrières ou du vitrage de bâtiments.

Un premier but de l'invention est d'obtenir un gain de temps appréciable lors de la mise en place de volumes de verre.

Un autre but de l'invention est d'accélérer les cadences de pose et de diminuer, en conséquence, le prix de la main-d'oeuvre.

Un autre but encore de l'invention est de diminuer les accidents de personnes et de diminuer les bris lors du montage.

L'invention a pour objet un engin de manutention monté sur un véhicule autotracté, pour feuilles de verre ou objets analogues pouvant être saisis par un plateau à ventouses, comportant un bras de manutention et des moyens pour actionner ce bras de manutention, un plateau à ventouses monté à l'extrémité du bras de manutention par l'intermédiaire d'un élément porte-plateau monté de manière télescopique à l'extrémité du bras et des moyens pour actionner les ventouses du plateau à ventouses, et des moyens de commande du véhicule autotracté, du bras de manutention et du plateau à ventouses.

L'engin de manutention suivant l'invention comporte un élévateur à nacelle permettant le positionnement de la nacelle dans l'espace. Les moyens de commande du véhicule autotracté de l'élévateur à nacelle, du bras de manutention et du plateau à ventouses sont montés dans la nacelle. Le bras de manutention est articulé et orientable et composé d'un élément arrière du bras et d'un avant-bras, l'élément arrière du bras étant monté sur un support porté par la nacelle et étant articulé par rapport à ce support autour d'un axe vertical et autour d'un axe horizontal, l'avant-bras étant articulé sur l'élément arrière du bras autour d'un axe horizontal.

L'élément porte-plateau est relié à la tige d'un vérin de placement dont le corps est monté dans l'avant-bras et est, en outre, guidé par des tiges de guidage qui passent dans des coulisses solidaires de l'avant-bras.

Suivant une forme d'exécution préférée, la nacelle affecte, dans son ensemble, la forme d'un parallélépipède rectangle, l'élément arrière du bras étant monté sur un support fixé près de l'extrémité inférieure d'une arête verticale de la nacelle, la longueur de l'élément arrière et la longueur de l'avant-bras correspondant sensiblement à la hauteur de la nacelle et à la largeur d'un de ses côtés, respectivement, de sorte que le bras de manutention peut être amené près du pourtour extérieur de la nacelle.

Dans cette forme de réalisation, le plateau à ventouses est, de préférence, monté sensiblement à la perpendiculaire de l'avant-bras et est relié à l'élément porte-plateau par un organe de liaison qui, grâce à un organe d'actionnement, permet au plateau à ventouses de pivoter autour d'un axe qui est sensiblement perpendiculaire au plan de ce plateau à ventouses.

Cet organe d'actionnement est, de façon avantageuse, un vérin hydraulique apte a faire pivoter le plateau à ventouses d'au moins 90°.

On utilise avantageusement, pour actionner le bras de manutention, des vérins ; ces vérins peuvent être soit des vérins hydrauliques (dans une forme préférée) ou des vérins pneumatiques.

On utilise également suivant une autre forme de réalisation, des moteurs électriques ou des moteurs hydrauliques pour actionner le bras de manutention.

L'élévateur à nacelle de cet engin est, de préférence, un élévateur à bras télescopique.

D'autres particularités et avantages de l'invention ressortiront de la description d'une forme de réalisation ci-après, appliquée à la manipulation de feuilles de verre à la construction d'une serre ; étant entendu que cet exemple d'utilisation n'est nullement limitatif. Référence est faite aux dessins annexés, dans lesquels :

la Fig. 1 est une vue schématique de l'engin de manutention dans son ensemble, la nacelle étant figurée dans différentes positions ;

la Fig. 2 est une vue en perspective de la nacelle avec son bras de manutention ;

la Fig. 3 est une vue plus détaillée de côté de l'extrémité pivotante du bras de manutention ;

la Fig. 4 est une vue en plan de cette extrémité pivotante du bras ;

la Fig. 5 est une vue en plan de la nacelle avec le bras de manutention replié ;

la Fig. 6 est une vue partielle du schéma hydraulique de commande du bras, et

la Fig. 7 est un schéma électrique simplifié du circuit de commande du bras.

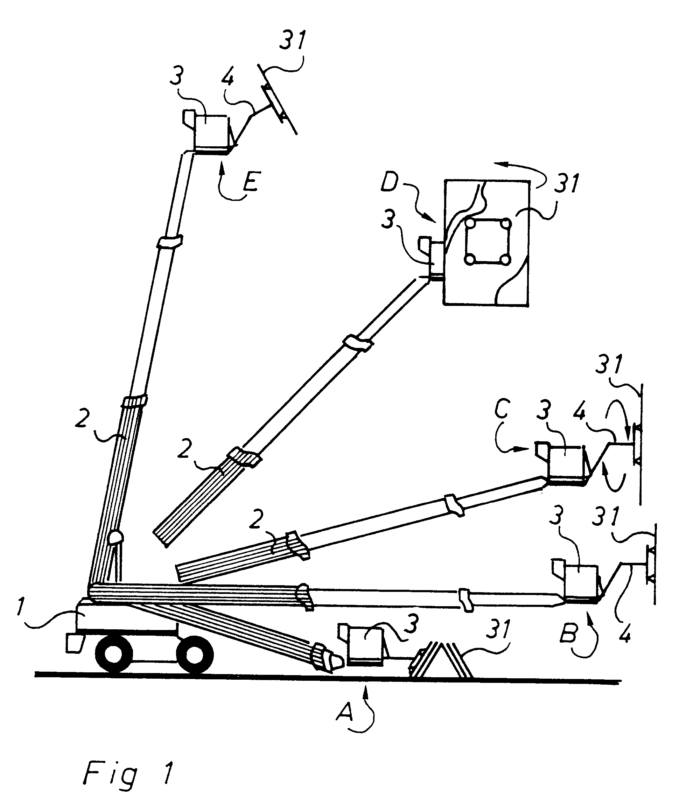

La Fig. 1 est une vue schématique latérale d'un engin de manutention selon l'invention dans son ensemble.

Sur un véhicule autotracté 1, de type conventionnel, est monté un bras élévateur 2 télescopique permettant d'élever la nacelle 3 à la hauteur désirée. Cinq positions successives de la nacelle 3 sont montrées.

Sur la nacelle 3 est monté un bras de manutention 4 articulé et orientable. L'opérateur de la nacelle 3 dispose d'un tableau de bord complet où sont regroupés les moyens de commande du bras de manutention 4, les moyens de commande du bras élévateur 2 et même des moyens de commande du véhicule autotracté 1.

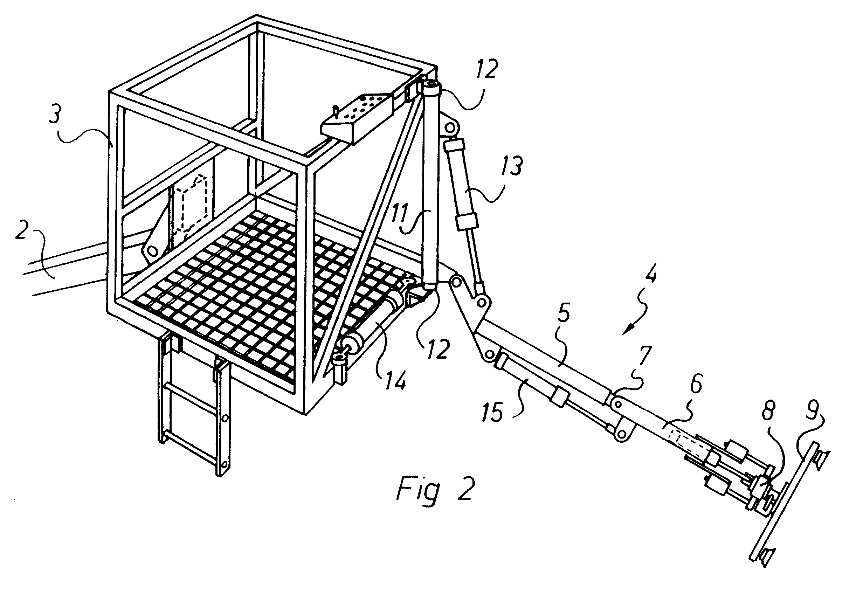

La Fig. 2 donne une vue en perspective de la nacelle 3 et de son bras articulé 4.

La nacelle 3 est de forme sensiblement parallélépipédique. Elle est reliée par sa face arrière au bras élévateur 2 par un dispositif (non représenté) qui la maintient constamment d'aplomb.

Le bras de manutention 4 est monté près d'un des angles de la face avant de la nacelle 3. Il comporte un élément arrière 5 et un avant-bras 6, ces deux éléments 5 et 6 étant reliés par une articulation 7. A l'extrémité de l'avant-bras 6 est fixé de façon télescopique un élément porte-plateau 8 (décrit plus en détail ci-après) qui supporte le plateau porte-ventouses 9.

L'élément arrière 5 du bras 4 pivote autour d'un axe horizontal supporté par un arbre pivotant 11 vertical monté sur deux tourillons 12 solidaires de la nacelle 3.

Un vérin de levage 13 hydraulique est monté entre l'arbre pivotant 11 et l'élément arrière 5, permettant ainsi de faire varier l'élévation du bras 4.

Un autre vérin, le vérin de pivotement 14, est raccordé entre la nacelle 3 et l'arbre pivotant 11, permettant d'orienter le bras 4 par rapport au plan de la face avant de la nacelle 3. Un troisième vérin, le vérin d'inclinaison 15, relie l'élément arrière 5 du bras 4 et l'avant-bras 6 et permet de faire pivoter ces deux parties l'une par rapport à l'autre autour de l'articulation 7.

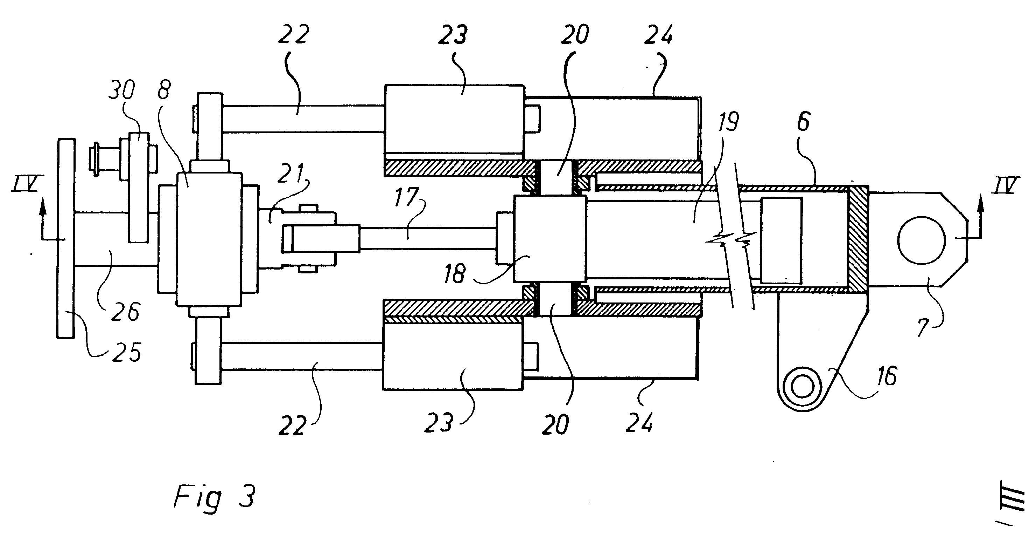

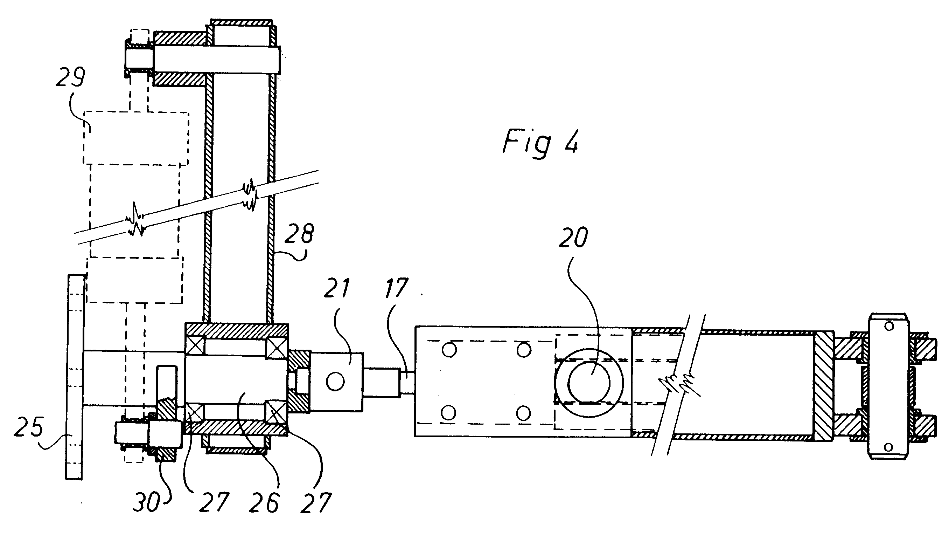

Les Fig. 3 et 4 montrent, plus en détail, l'avant-bras 6 et le porte-plateau 8.

La patte 16 supporte le vérin d'inclinaison 15. L'extrémité de l'avant-bras 6 supporte un chariot porte-plateau 8 mobile, qui peut se déplacer longitudinalement par rapport à l'avant-bras 6. Le porte-plateau 8 est fixé à la tige 17 d'un vérin, le vérin de positionnement 18, le corps 19 de ce vérin 18 étant monté à l'intérieur de l'avant-bras 6 sur des tourillons 20.

L'extrémité de la tige 17 du vérin 18 est fixée au porte-plateau par une chape 21, de sorte qu'aucune contrainte de torsion n'est exercée sur le vérin 18. Des tiges de guidage 22 passant dans des coulisses 23 guident l'ensemble du porte-plateau 8 par rapport à l'avant-bras 6. Une gaine de protection 24 est montée à l'arrière des coulisses 23 pour éviter tout contact avec les tiges de guidage 22.

Le porte-plateau supporte un disque pivotant 25, l'axe 26 de ce disque 25 est monté sur roulements 27 et est aligné sensiblement selon l'axe de l'avant-bras 6. Une barre d'appui 28 est fixée au porte-plateau 8, faisant sensiblement un angle droit avec l'axe de l'avant-bras 6. Un vérin de pivotement 29 est monté entre l'extrémité de cette barre d'appui 28 et une patte 30 solidaire du disque pivotant 25. Lorsque ce vérin de pivotement 29 est actionné, il provoque la rotation du disque pivotant 25 par rapport au porte-plateau 8 et donc à l'ensemble de l'avant-bras 6. C'est sur ce disque pivotant 25 qu'est monté le plateau à ventouses 9 qui permet de maintenir avec fermeté les feuilles de verre durant les manipulations effectuées avec le bras 4.

Comme il est montré à la Fig. 1, dans sa première position (A), la nacelle est alignée face à des volumes de verre 31 empilés ou déposés sur un chevalet.

Le bras est à ce moment en extension, dirigé légèrement vers le bas. Le plateau à ventouses 9 est appliqué contre le verre 31 qui est saisi fermement. L'opérateur actionne alors le vérin de positionnement 18, rétractant ainsi l'extrémité télescopique du porte-plateau 8. Le volume de verre 31 saisi est entraîné et dégagé de l'empilement.

Le bras est alors partiellement replié (l'élément arrière 5 étant pointé vers le haut, l'avant-bras 6 étant à l'horizontale) (B) pendant que la nacelle 3 est rapprochée du lieu de placement du volume de verre 31. Une fois en position (C), le volume 31 peut être basculé grâce au plateau pivotant) de façon à présenter son petit côté vers le haut ou être présenté par la tranche (D) en rabattant l'avant-bras 6 sur le côté de la nacelle 3 de façon à pouvoir être inséré à l'intérieur d'un châssis par exemple. En ramenant le bras 4 vers le haut (E) et en descendant la nacelle 3, le volume de verre 31 peut être amené en place avec une très grande précision et déposé.

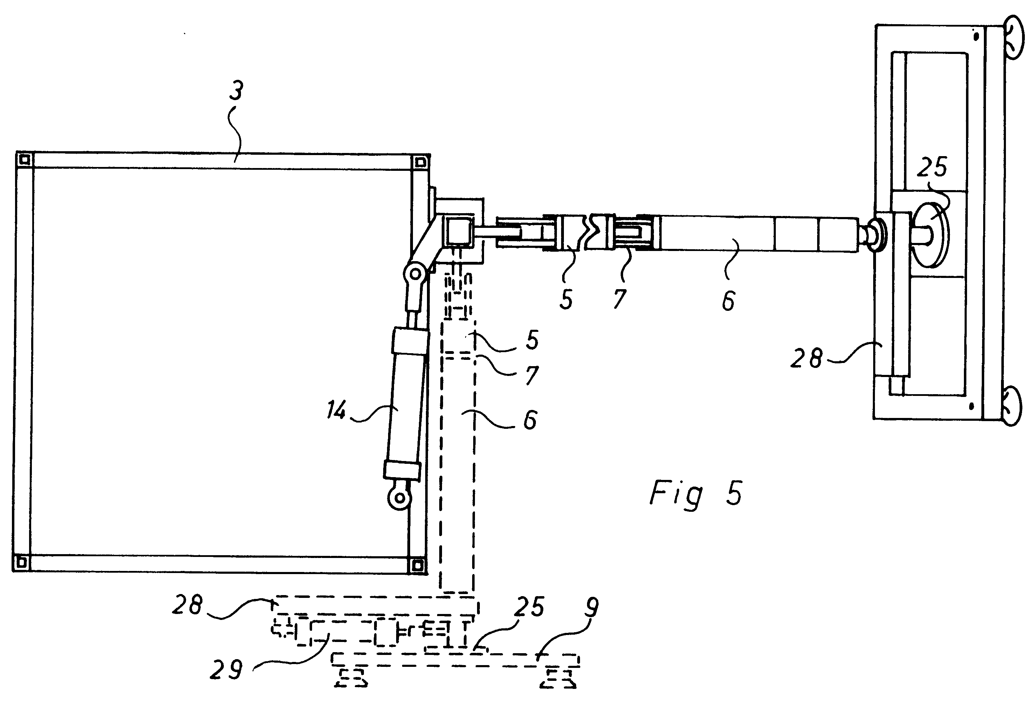

Dans le cas d'une couverture de serre, l'opérateur peut alors replier le bras (comme on peut le voir à la Fig. 5) et procéder manuellement aux opérations de fixation du volume 31 sans être gêné par les excroissances de l'appareillage.

La Fig. 5 montre la nacelle 3 avec le bras replié de façon à ne pas gêner l'opérateur : l'élément arrière 5 est relevé en position verticale, le vérin de pivotement 29 est en extension et amène l'avant-bras 6 (en position horizontale) le long de la face avant de la nacelle 3, le plateau à ventouses 9 et son mécanisme de pivotement (28, 29) étant rabattus le long d'une face latérale de la nacelle 3. Les dimensions respectives des côtés de la nacelle 3, de l'élément arrière 5 et de l'avant-bras 6 correspondent, si bien que le bras 4 enlace littéralement la nacelle 3 et n'ajoute pratiquement rien à l'encombrement de cette nacelle 3.

Par ailleurs, pour accroître la sécurité de l'opérateur (particulièrement lorsque le bras 4 amène la feuille de verre en surplomb par rapport à la nacelle), un écran de matière plastique transparente telle que du polycarbonate (non représenté) peut être fixé obliquement par des montants au-dessus de la nacelle.

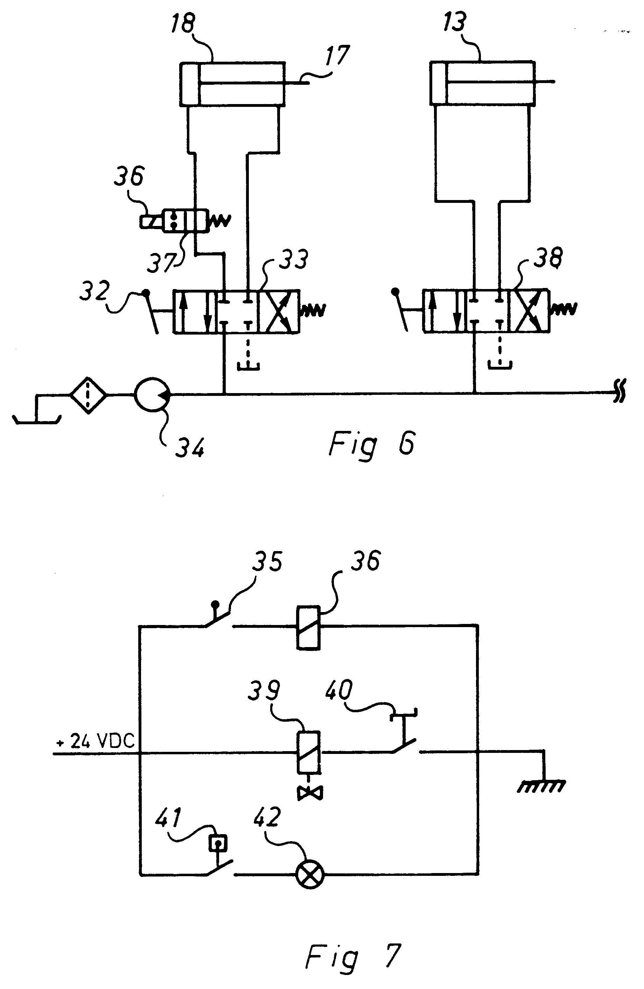

La Fig. 6 est un schéma hydraulique de principe de la commande du vérin de positionnement 18, qui sera décrit en se référant également au schéma électrique de la Fig. 7. La manette de commande 32 du vérin actionne un distributeur 33 à trois positions. Le distributeur 33 permet de commander à volonté l'avance ou le recul de la tige 17 du vérin 18 en y admettant le fluide sous pression délivré par la pompe 34.

Un dispositif de sécurité est prévu de façon à ce que le plateau à ventouses 9 ne puisse heurter le volume de verre sur lequel il s'applique. Lorsque le plateau porte-ventouses 9 touche un volume de verre ou tout autre objet, une butée de contact 35 est actionnée, fermant le circuit d'alimentation de la bobine d'un relais 36. Ce relais 36 actionne le distributeur 37, interrompant ainsi la course du vérin 18.

Sur la Fig. 6 est représenté le circuit du vérin de levage 13 actionné manuellement par un simple distributeur 38. Les vérins de pivotement 14 et d'inclinaison 15 sont commandés par des circuits (non représentés) identiques à celui du vérin 13.

Sur le schéma de la Fig. 7 est également figuré le circuit de commande du plateau à ventouses.

Le circuit de vide est commandé par l'électrovanne 39, que l'opérateur actionne par un interrupteur marche-arrêt 40. Un pressostat 41 mesure en permanence la dépression dans le circuit des ventouses du plateau 9 et avertit l'opérateur par l'allumage du voyant 42 lorsque la prise du verre est assurée.

Il va de soi, pour l'homme de métier, que l'engin ici décrit avec un bras hydraulique peut être équipé de vérins fonctionnant avec divers fluides tels que l'air comprimé, ou encore être muni d'un bras actionné par des moteurs électriques ou hydrauliques.

Par ailleurs, l'élévateur 2 à nacelle, ici décrit avec un bras télescopique, peut également être muni d'un bras articulé.

## Revendications

1. Engin de manutention monté sur un véhicule autotracté, pour feuilles de verre ou objets analogues pouvant être saisis par un plateau à ventouses (9), comportant un bras de manutention (4) et des moyens (13, 14, 15) pour actionner ce bras de manutention (4), un plateau à ventouses (9) monté à l'extrémité du bras de manutention (4) par l'intermédiaire d'un élément porte-plateau (8) monté de manière téléscopique à l'extrémité du bras (4) et des moyens pour actionner les ventouses du plateau à ventouses (9), et des moyens de commande du véhicule autotracté (1), du bras de manutention (4) et du plateau à ventouses (9), caractérisé en ce qu'il comporte

un élévateur (2) à nacelle (3) permettant le positionnement de la nacelle dans l'espace,

les moyens de commande du véhicule autotracté (1), de l'élévateur (2) à nacelle, du bras de manutention (4) et du plateau à ventouses (9) étant montés dans la nacelle (3),

le bras de manutention (4) étant articulé et orientable et composé d'un élément arrière (5) du bras et d'un avant-bras (6), l'élément arrière (5) du bras étant monté sur un support porté par la nacelle (3) et étant articulé par rapport à ce support (12), autour d'un axe vertical et autour d'un axe horizontal, l'avant-bras (6) étant articulé sur l'élément arrière (5) du bras autour d'un axe horizontal,

l'élément porte-plateau (8) étant relié à la tige (17) d'un vérin de placement (18) dont le corps (19) est monté dans l'avant-bras (6) et étant, en outre, guidé par des tiges de guidage (22) qui passent dans des coulisses (23) solidaires de l'avant-bras (6).

2. Engin de manutention suivant la revendication 1, caractérisé en ce que la nacelle (3) affecte, dans son ensemble, la forme d'un parallélépipède rectangle, l'élément arrière (5) du bras étant monté sur un support fixé près de l'extrémité inférieure d'une arête verticale de la nacelle (3), la longueur de l'élément arrière (5) et la longueur de l'avant-bras (6) correspondant sensiblement à la hauteur de la nacelle (3) et à la largeur d'un de ses cotés, respectivement, de sorte que le bras (4) de manutention peut être amené près du pourtour extérieur de la nacelle (3) de façon à ne pas gêner les manoeuvres.

3. Engin de manutention suivant l'une quelconque des revendications précédentes, caractérisé en ce que le plateau à ventouses (9) est monté sensiblement à la perpendiculaire de l'avant-bras (6), et est relié à l'élément porte-plateau (8) par un organe de liaison (25) qui, grâce à un organe de pivotement (29), permet au plateau à ventouses (9) de pivoter autour d'un axe (26) qui est sensiblement perpendiculaire au plan de ce plateau à ventouses (9).

4. Engin de manutention suivant la revendication 3, caractérisé en ce que ledit organe de pivotement (29) est un vérin (29) apte à faire pivoter le plateau à ventouses (9) d'au moins 90°.

5. Engin de manutention suivant l'une quelconque des revendications précédentes, caractérisé en ce que les moyens (13, 14, 15) pour actionner le bras de manutention (4) sont des vérins (13, 14, 15).

6. Engin de manutention suivant la revendication 5, caractérisé en ce que les vérins (13, 14, 15) sont des vérins hydrauliques.

7. Engin de manutention suivant la revendication 5, caractérisé en ce que les vérins (13, 14, 15) sont des vérins pneumatiques.

8. Engin de manutention suivant la revendication 3, caractérisé en ce que les moyens (13, 14, 15) pour actionner le bras de manutention (4) sont des moteurs électriques.

9. Engin de manutention suivant la revendication 3, caractérisé en ce que les moyens (13, 14, 15) pour actionner le bras de manutention (4) sont des moteurs hydrauliques.

10. Engin de manutention suivant l'une quelconque des revendications précédentes, caractérisé en ce que l'élévateur (2) à nacelle (3) est un élévateur à bras télescopique.

**Patentansprüche**

1. Auf einem selbstfahrenden Fahrzeug montierte Hebevorrichtung für Glasscheiben oder dgl. durch eine Saugerplatte (9) greifbare Gegenstände, bestehend aus einem Transportarm (4) und Mitteln (13, 14, 15) zum Betätigen des Transportarms (4), einer Saugerplatte (9), die am Ende des Transportarms (4) über ein teleskopisch am Ende des Arms (4) angebrachtes Plattentragelement (8) montiert ist, Mitteln zum Betätigen der Sauger der Saugerplatte (9) und Antriebsmitteln des selbstfahrenden Fahrzeugs (1), des Transportarms (4) und der Saugerplatte (9), dadurch gekennzeichnet, daß es

eine Hubvorrichtung (2) mit Korb (3) umfaßt, die die Anordnung des Korbes im Raum ermöglicht, die Antriebsmittel des selbstfahrenden Fahrzeugs (1), der Korbhubvorrichtung (2), des Transportarms (4) und der Saugerplatte (9) im Korb (3) angebracht sind,

der Transportarm (4) gelenkig und ausrichtbar ist sowie aus einem hinteren Element (5) des Arms und einem Vorderarm (6) besteht, wobei das hintere Element (5) des Arms an einem vom Korb (3) gehaltenen Träger angebracht und in bezug auf den Träger (12) um eine vertikale Achse und um eine horizontale Achse schwenkbar ist, während der Vorderarm (6) an dem hinteren Element (5) des Arms um eine horizontale Achse schwenkbar ist, und

das Plattentragelement (8) mit der Kolbenstange (17) eines Anstellungszylinders (18) verbunden ist, dessen Gehäuse (19) im Vorderarm (6) angebracht und außerdem von Führungsstangen (22) geführt ist, die in mit dem Vorderarm (6) einteilige Gleitführungen (23) eingreifen.

2. Hebevorrichtung nach Anspruch 1, dadurch gekennzeichnet, daß der Korb (3) in seiner Gesamtheit die Form eines Rechteckparallelepipeds darbietet, das hintere Element (5) des Arms an einem nahe dem unteren Ende einer vertikalen Kante des Korbes (3) befestigten Träger angebracht ist und die Länge des hinteren Elements (5) und die Länge des Vorderarms (6) im wesentlichen der Höhe des Korbes (3) bzw. der Breite seiner Seiten entsprechen, derart, daß der Transportarm (4) dicht am Außenumfang des Korbes (3) geführt werden kann, um so das Manövrieren nicht zu behindern.

3. Hebevorrichtung nach einem der vorhergehenden Ansprüche, dadurch gekennzeichnet, daß die Saugerplatte (9) im wesentlichen in der Senkrechten des Vorderarms (6) angebracht und mit dem Plattentragelement (8) durch ein Verbindungsorgan (25) verbunden ist, das es aufgrund eines Schwenkorgans (29) der Saugerplatte (9) ermöglicht, um eine Achse (26) zu schwenken, die im wesentlichen senkrecht zur Ebene der Saugerplatte (9) verläuft.

4. Hebevorrichtung nach Anspruch 3, dadurch gekennzeichnet, daß das Schwenkorgan (29) ein Arbeitszylinder (29) ist, der geeignet ist, die Saugerplatte (9) um zumindest 90° zu verschwenken.

5. Hebevorrichtung nach einem der vorhergehenden Ansprüche, dadurch gekennzeichnet, daß die Mittel (13, 14, 15) zum Betätigen des Transportarms (4) Arbeitszylinder (13, 14, 15) sind.

6. Hebevorrichtung nach Anspruch 5, dadurch gekennzeichnet, daß die Arbeitszylinder (13, 14, 15) Hydraulikzylinder sind.

7. Hebevorrichtung nach Anspruch 5, dadurch gekennzeichnet, daß die Arbeitszylinder (13, 14, 15) Pneumatikzylinder sind.

8. Hebevorrichtung nach Anspruch 3, dadurch gekennzeichnet, daß die Mittel (13, 14, 15) zum Betätigen des Transportarms (4) Elektromotoren sind.

9. Hebevorrichtung nach Anspruch 3, dadurch gekennzeichnet, daß die Mittel (13, 14, 15) zum Betätigen des Transportarms (4) Hydraulikmotoren sind.

10. Hebevorrichtung nach einem der vorhegehenden Ansprüche, dadurch gekennzeichnet, daß die Hubvorrichtung (2) mit Korb (3) eine Hubvorrichtung mit Teleskopausleger ist.

**Claims**

1. Lifting device mounted on a self-powered vehicle, for sheets of glass or similar objects capable of being gripped by a sucker plate (9), comprising a lifting arm (4) and means (13, 14, 15) for actuating this lifting arm (4), a sucker plate (9) mounted at the end of the lifting arm (4) via a plate-carrying element (8) mounted telescopically at the end of the arm (4) and means for actuating the suckers of the sucker plate (9), and means for controlling the self-powered vehicle (1), the lifting arm (4) and the sucker plate (9), characterised in that it comprises

an elevator (2) with a platform (3) enabling the platform to be positioned in space,

the means for controlling the self-powered vehicle (1), the elevator (2) with a platform, the lifting arm (4) and the sucker plate (9) being mounted in the platform (3),

the lifting arm (4) being articulated and orientable and composed of a rear element (5) of the arm and a front arm (6), the rear element (5) of the arm being mounted on a support carried by the platform (3) and being articulated with respect to this support (12), about a vertical axis and about a horizontal axis, the front arm (6) being articulated on the rear element (5) of the arm about a horizontal axis,

the plate-carrying element (8) being connected to the rod (17) of a positioning jack (18) the body (19) of which is mounted in the front arm (6), and being, furthermore, guided by guide rods (22) which pass through slide blocks (23) integral with the front arm (6).

2. Lifting device according to Claim 1, characterised in that the platform (3) has, as a whole, the shape of a rectangular parallelepiped, the rear element (5) of the arm being mounted on a support fixed near the lower end of a vertical edge of the platform (3), the length of the rear element (5) and the length of the front arm (6) corresponding substantially to the height of the platform (3) and to the width of one of its sides, respectively, with the result that the lifting arm (4) can be brought near to the outer periphery of the platform (3) so as not to hinder manoeuvres.

3. Lifting device according to any one of the preceding claims, characterised in that the sucker plate (9) is mounted substantially perpendicular to the front arm (6) and is connected to the plate-carrying element (8) by a linking member (25) which, by virtue of a pivoting member (29), enables the sucker plate (9) to pivot about a shaft (26) which is substantially perpendicular to the plane of this sucker plate (9).

4. Lifting device according to Claim 3, characterised in that the said pivoting member (29) is a jack (29) capable of pivoting the sucker plate (9) by at least 90°.

5. Lifting device according to any one of the preceding claims, characterised in that the means (13, 14, 15) for actuating the lifting arm (1) are jacks (13, 14, 15).

6. Lifting device according to Claim 5, characterised in that the jacks (13, 14, 15) are hydraulic jacks.

7. Lifting device according to Claim 5, characterised in that the jacks (13, 14, 15) are pneumatic jacks.

8. Lifting device according to Claim 3, characterised in that the means (13, 14, 15) for actuating the lifting arm (4) are electric motors.

9. Lifting device according to Claim 3, characterised in that the means (13, 14, 15) for actuating the lifting arm (4) are hydraulic motors.

10. Lifting device according to any one of the preceding claims, characterised in that the elevator (2) with a platform (3) is a telescopic-arm elevator.

Fig 1

Fig 2

Fig 3

*Fig 4*

EP 0 393 004 B1

Fig 5

Fig 6

Fig 7